# EUROPÄISCHE PATENTSCHRIFT

(11) **EP 0 327 953 B1**
(45) Veröffentlichungstag und Bekanntmachung des Hinweises auf die Patenterteilung: **05.10.1994**
(21) Anmeldenummer: 89101770.9
(22) Anmeldetag: 02.02.1989
(51) Int. Cl.: B32B 21/10, A47B 96/20, B27D 1/00

(54) **Flechtband und Verfahren zu seiner Herstellung**
Wickerwork band and method of making it
Bande en vannerie et procédé pour sa fabrication

(30) Priorität: 12.02.1988 DE 8801814 U
(43) Veröffentlichungstag der Anmeldung: 16.08.1989
(73) Patentinhaber: Flechtatelier Kurt Schütz GmbH, D-96215 Lichtenfels (DE)
(72) Erfinder: Schütz, Kurt, D-8620 Lichtenfels (DE)
(74) Vertreter: Metzler, Jürgen, Dipl.-Ing.

(56) Entgegenhaltungen:
- FR-A- 2 303 665
- GB-A- 591 479

## Beschreibung

Die Erfindung bezieht sich auf ein Flechtband zum Herstellen von Geflechten und Flechtwerken sowie auf ein Verfahren zur Herstellung des Flechtbandes.

Das Flechten, d.h. das Verkreuzen des band-, streifen- oder fadenförmigen Flechtmaterials in der Weise, daß es sich abwechselnd über- und unterläuft, zur Herstellung von Geflechten bzw. Flechtwerken, ist schon seit frühester Zeit bekannt. Durch Flechten werden die verschiedensten Artikel hergestellt, wie Matten, Körbe, Gürtel, Decken usw. Vor allem in der Möbelindustrie bzw. beim Möbelbau hat das Flechten Eingang gefunden bei der Herstellung sogenannter Korbmöbel. Da das Flechten von Hand erfolgt und hohe Hand- und Kunstfertigkeit verlangt, stellt jedes aus Geflechten oder Flechtwerken bestehende Möbel bei sorgfältiger Verarbeitung ein individuelles künstlerisches Werk dar, das in seiner Ästhetik das Wohnen verschönert.

Da beim Flechten verhältnismäßig große Kräfte, insbesondere als Zugkraft, auf das Flechtmaterial aufgebracht werden müssen, um ein festes und dauerhaftes Flechtwerk zu erhalten, darf das Flechtmaterial nicht zu dünn sein. Auch sind besondere Werkstoffe organischer Art erforderlich, die die hohen Zugkräfte aufnehmen und aushalten können. Bei bandförmigem Flechtmaterial werden vor allem exotische Edelhölzer benötigt, die zum Teil schwer zu beschaffen und aufgrund ihrer Seltenheit entsprechend teuer sind.

Die Aufgabe der Erfindung besteht darin, ein Flechtband zum Herstellen von Geflechten und Flechtwerken, insbesondere zur Verwendung beim Bau und bei der Fertigung von Möbeln, zu schaffen, das im wesentlichen aus heimischen und jederzeit zur Verfügung stehenden Hölzern besteht, große Zugspannungen aufnimmt, ohne daß es hierbei zu einer Zerstörung des Flechtbandes kommt, und leicht zu verarbeiten ist. Eine weitere Aufgabe besteht darin, ein Verfahren zur einfachen und kostengünstigen Herstellung des Flechtbandes anzugeben. Das Flechtband soll sehr dünn sein und trotzdem auch großen Zugkräften widerstehen. Insbesondere soll die Gefahr eines seitlichen Ausreißens und Absplitterns des Flechtbandes vermieden sein. Das aus derartigen Flechtbändern hergestellte Flechtwerk soll große Haltbarkeit, insbesondere aber auch ein ästhetisches Aussehen besitzen.

Zur Lösung dieser Aufgabe sind bei der Erfindung die im kennzeichnenden Teil des Anspruches 1 angegebenen Merkmale vorgesehen, wobei noch in den dem Anspruch 1 folgenden Ansprüchen 2 bis 4 sowie im das Verfahren zur Herstellung beinhaltenden Anspruch 5 für die Aufgabenlösung vorteilhafte und förderliche Weiterbildungen beansprucht sind.

Das erfindungsgemäße Flechtband zeichnet sich also dadurch aus, daß es aus streifenförmigem Furnierholz besteht, auf dessen Rückseite ein fest mit dem Furnier verbundenes textiles Gewebe angeordnet ist. Für das Furnierholz wird nach einem weiteren Merkmal der Erfindung vorzugsweise Esche oder ein anderes leicht beschaffbares Holz verwendet. Während also durch das auf der Furnierrückseite aufgebrachte textile Gewebe, das aus Baumwolle oder Kunstfasern bestehen kann, hohe Kräfte übertragen und aufgenommen werden können, kann das Furnier selbst dünn gehalten werden und zeigt auf seiner Oberseite die dem Furnier eigene Holzmaserung und -flammung, so daß Flechtwerke hohen ästhetischen Aussehens hergestellt werden können. Das ästhetische Aussehen des Flechtwerks wird hierbei noch durch die Verwendung von Flechtbändern unterschiedlicher Breite geprägt. Das textile Gewebe bedeckt die gesamte Unterseite des Furniers und ist unter Druck mittels eines wasserunlöslichen Leims am Furnier aufgeklebt. Hierdurch ist est möglich, das Flechtband vor dem Verarbeiten zu wässern, so daß es geschmeidig wird, ohne daß es zu einem Ablösen des Gewebes kommt. Ein seitliches Absplittern oder Einreißen des Furniers wird mit Sicherheit vermieden. Das Flechtband kann beim Flechten straff gespannt werden, ohne daß es reißt. Ein mit einem derartigen Flechtband hergestelltes Flechtwerk besitzt eine lange Lebensdauer und gibt einem Möbel, an dem es angebracht ist, ein formschönes und geschmackvolles Aussehen.

Die Erfindung wird nun anhand eines Ausführungsbeispiels im Zusammenhang mit der Zeichnung näher erläutert. Es zeigen:
- Fig. 1: die Draufsicht auf das Flechtband, d.h. seine oben oder außen liegende Sichtseite,
- Fig. 2: die Rückseite des Flechtbandes, das jeweils abgebrochen gezeigt ist, und
- Fig. 3: einen stark vergrößerten Querschnitt durch das Flechtband gemäß Schnitt III - III in Fig. 2.

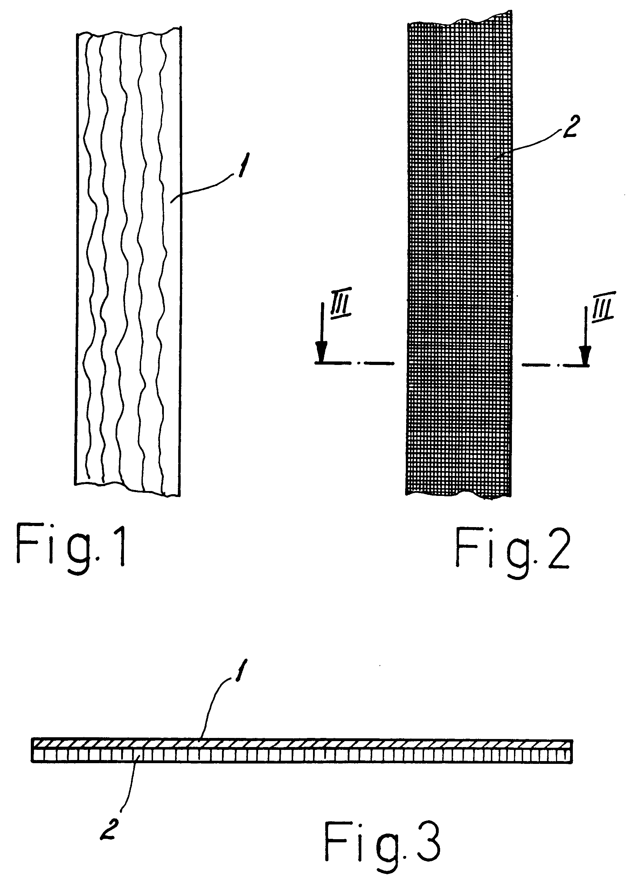

Das in den Fig. 1 bis 3 gezeigte Flechtband besteht im wesentlichen aus einem streifenförmigen Holzfurnier 1, das die Außen- oder Oberseite des Flechtbandes bildet und dem Betrachter zugewandt ist (Fig. 1). Auf der Rückseite bzw. Unterseite des Furniers 1 ist ein textiles Gewebe 2 angeordnet, das fest mit dem Furnier 1 verbunden ist. Das textile Gewebe 2 kann aus Baumwolle od. dgl., aber auch aus Kunstfasern, bestehen. Die Verbindung zwischen dem textilen Gewebe 2 und dem Furnier 1 erfolgt durch einen wasserunlöslichen Leim bzw. Kleber. Wie Fig. 2 deutlich zeigt, bedeckt das textile Gewebe 2 die gesamte Unterseite des Furniers 1, das beispielsweise aus Esche besteht. In Fig. 1 ist auch die Maserung oder Flammung des Furniers 1 angedeutet, die je nach dem Herstellverfahren des Furniers 1 als Schäl-, Säge-, Dreh- oder Messerfurnier erhalten wird. Das Flechtband bzw. Flechtmaterial kann verschiedene Breiten aufweisen, wobei Flechtbänder mit unterschiedlichen Breiten zum Flechtwerk verarbeitet werden, so daß eigenartige und prägende Strukturen entstehen. Die beim Flechten auftretenden großen Längs- bzw. Zugkräfte werden sicher vom textilen Gewebe 2 aufgenommen und vom Furnierholz 1 ferngehalten, das deshalb weder splittert noch einreißt. Das Flechtband bzw. -material läßt sich leicht verarbeiten und weist eine große Lebens- und Gebrauchsdauer auf.

Bei der Herstellung des Flechtbandes bzw. Flechtmaterials werden mehrere Furnierblätter nebeneinanderliegend miteinander verbunden, sodann auf der Unterseite der Kleber und das textile Gewebe aufgebracht und unter Druck mit dem Furnier verbunden. Das Furnier wird sodann in Streifen gewünschter Breite geschnitten. Das erhaltene Verbundmaterial weist eine große Festigkeit auf.

## Patentansprüche

1. Flechtband zum Herstellen von Geflechten und Flechtwerken, dadurch gekennzeichnet, daß es aus streifenförmigem Furnierholz (1) besteht, auf dessen Rückseite ein textiles Gewebe (2) angeordnet ist, das fest mit dem Funierholz (1) verbunden ist.

2. Flechtband nach Anspruch 1, dadurch gekennzeichnet, daß das textile Gewebe (2) mit einem wasserunlöslichen Leim unter Preßdruck auf dem Furnierholz (1) aufgeklebt ist.

3. Flechtband nach Anspruch 1 oder 2, dadurch gekennzeichnet, daß das textile Gewebe (2) die gesamte Rückseite des Furniers (1) bedeckt.

4. Flechtband nach einem oder mehreren der Ansprüche 1 bis 3, dadurch gekennzeichnet, daß das Furnierholz (1) ein Eschefurnier ist.

5. Verfahren zur Herstellung des Flechtbandes nach einem der Ansprüche 1 bis 4, dadurch gekennzeichnet, daß mehrere Furnierblätter nebeneinanderliegend miteinander verbunden, sodann auf der Unterseite der Kleber und das textile Gewebe (2) aufgebracht und unter Preßdruck mit dem Furnier (1) verbunden werden, und daß das Furnier (1) anschließend in Streifen gewünschter Breite geschnitten wird.

## Claims

1. Wickerwork band for making of wickerworks and wattlings, characterised in that it consists of strip-like veneer wood (1) on the backside of which a textile fabric (2) is arranged and firmly connected with the veneer wood (1).

2. Wickerwork band according to claim 1, characterised in that the textile fabric (2) is bonded to the veneer wood (1) under pressure with a glue insoluble in water.

3. Wickerwork band according to claim 1 or 2, characterised in that the textile fabric (2) covers the complete back side of the veneer (1).

4. Wickerwork band according to one ore several of the claims 1 to 3, characterised in that the veneer wood (1) consists of ash-tree.

5. Method of making the wickerwork band according to one of the claims 1 to 4, characterised in that several veneers arranged side by side are joined together, then the glue and the textile fabric (2) are brought upon the backside and bonded to the veneer (1) under pressure and that then the veneer (1) is cut in strips with desired width.

## Revendications

1. Ruban à tresser pour la réalisation de claies et treillages, caractérisé en ce qu'il consiste en du bois de placage en forme de bande (1) sur la face arrière duquel est disposé un tissu textile (2) qui est rendu solidaire du bois de placage (1).

2. Ruban à tresser suivant la revendication 1, caractérisé en ce que le tissu textile (2) est collé sous pression de moulage sur le bois de placage (1), à l'aide d'une colle insoluble dans l'eau.

3. Ruban à tresser suivant la revendication 1 ou 2, caractérisé en ce que le tissu textile (2) recouvre toute la face arrière du bois de placage (1).

4. Ruban à tresser suivant une ou plusieurs des revendications 1 à 3, caractérisé en ce que le bois de placage (1) est un placage en frêne.

5. Procédé pour la fabrication du ruban à tresser suivant l'une des revendications 1 à 4, caractérisé en ce que plusieurs feuilles de placage sont assemblées l'une à l'autre juxtapposées, puis, l'adhésif et le tissu textile (2) sont appliqués sur la face inférieure et assemblés sous pression de moulage avec le placage (1), et que le placage (1) est ensuite découpé en bandes de largeur souhaitée.
